Europäisches Patentamt

European Patent Office

Office européen des brevets

(11) Veröffentlichungsnummer : **0 092 773**
**B1**

(12) **EUROPÄISCHE PATENTSCHRIFT**

(45) Veröffentlichungstag der Patentschrift :
30.07.86

(51) Int. Cl.⁴ : **H 04 B 5/00, G 08 C 23/00**

(21) Anmeldenummer : **83103788.2**

(22) Anmeldetag : **19.04.83**

(54) **Vorrichtung zur induktiven Übertragung und Auswertung von Signalen von einer bewegbaren Einrichtung zu einer Auswertestelle.**

(30) Priorität : **19.04.82 DE 3214322**

(43) Veröffentlichungstag der Anmeldung :
**02.11.83 Patentblatt 83/44**

(45) Bekanntmachung des Hinweises auf die Patenterteilung : **30.07.86 Patentblatt 86/31**

(84) Benannte Vertragsstaaten :
**AT BE CH DE FR LI NL**

(56) Entgegenhaltungen :
**CH-A- 498 459**
**DE-A- 3 008 597**
**GB-A- 1 187 931**
**NL-C- 112 180**

(73) Patentinhaber : **Hüllwegen, Josef**
**Hüttenstrasse 61**
**D-4791 Altenbeken (DE)**

(72) Erfinder : **Hüllwegen, Josef**
**Hüttenstrasse 61**
**D-4791 Altenbeken (DE)**

(74) Vertreter : **Patentanwälte Schaumburg & Thoenes**
**Mauerkircherstrasse 31 Postfach 86 07 48**
**D-8000 München 80 (DE)**

**Beschreibung**

Die Erfindung betrifft eine Vorrichtung zur induktiven Übertragung und Auswertung von Signalen, insbesondere von Schaltbefehlen, von einer über einen vorbestimmten Weg bewegbaren, mit einem durch äußere Einwirkung betätigbaren Schalter versehenen Einrichtung zu einer Auswertestelle, wobei längs des vorbestimmten Weges oder dazu parallel eine Leiterschleife vorgesehen ist, auf die ein Wechselspannungssignal eingespeist wird, und wobei eine an der bewegbaren Einrichtung angeordnete und mit der Leiterschleife gekoppelte Induktivität durch den Schalter veränderbar ist.

An die Übertragung und Auswertung von Signalen, insbesondere von Schaltbefehlen, von einer bewegbaren Einrichtung zu einer Auswertestelle sind besonders hohe Anforderungen hinsichtlich Schaltsicherheit und -genauigkeit zu stellen, wenn dieses Prinzip zur Sicherung bewegter Einrichtungen gegen Personenschäden eingesetzt wird. Anwendungsfälle sind beispielsweise Schiebetore oder auch Personenaufzüge. Neben den üblichen Grenzschaltern, die ein selbsttätiges Ausschalten des Antriebs bei Erreichen einer vorbestimmten Stellung bewirken, sind bei derartigen bewegten Einrichtungen auch Sicherheitsschalter erforderlich, die dann einen Schaltbefehl an eine Auswertestelle abgeben sollen, wenn im Bewegungsbereich der bewegten Einrichtung Gegenstände oder Personen stehen, an die die bewegte Einrichtung anstoßen kann. Hierzu kann gemäß bisheriger Technik an der bewegten Einrichtung, beispielsweise an einem Schiebetor, eine Schutzeinrichtung in Form eines Gummihohlprofils vorgesehen sein, das beim unbeabsichtigten Auftreffen auf einen Gegenstand zusammengedrückt wird, so daß in seinem Inneren eine Druckwelle entsteht, die einen pneumatisch betätigbaren elektrischen Schalter beaufschlagt, durch den ein Schaltbefehl abgegeben werden kann. Dieser Schaltbefehl ist von der bewegbaren Einrichtung zur Auswertestelle zu übertragen, so daß der Antrieb der bewegbaren Einrichtung stillgesetzt oder auch umgesteuert werden kann.

Eine Vorrichtung eingangs genannter Art ist bereits aus der NL-C-112 180 bekannt. Bei ihr ist eine mit einer bewegbaren Einrichtung fest verbundene Leiterschleife vorgesehen, die an zwei Umlenkrollen umgelenkt ist. Die Leiterschleife umfaßt im Bereich der bewegbaren Einrichtung eine Induktivität und eine Kapazität, welche einzeln abhängig von der Stellung eines an der bewegbaren Einrichtung angeordneten Schalters kurzgeschlossen werden können. Eine Wechselspannung wird an einer Einspeisestelle über ein erstes induktives Koppelelement auf die Leiterschleife eingespeist. An einer von der Einspeisestelle räumlich getrennten Auswertestelle wird die auf der Leiterschleife übertragene Wechselspannung über ein zweites induktives Koppelelement ausgekoppelt und einer Phasenvergleichsschaltung zugeführt. Die an der Einspeisestelle auf die Leiterschleife eingespeiste Wechselspannung wird gleichzeitig einem kompliziert aufgebauten elektrischen Netzwerk zugeführt, das die Übertragungseigenschaften der beiden induktiven Koppelelemente, der Leiterschleife und der an der Leiterschleife angeordneten Induktivität und Kapazität nachbildet. Die Ausgangsspannung des elektrischen Netzwerkes wird der Phasenvergleichsschaltung als Referenzspannung zugeführt. Wenn entweder die in der Leiterschleife angeordnete Induktivität oder die ebenfalls in der Leiterschleife angeordnete Kapazität mit dem an der bewegbaren Einrichtung angeordneten Schalter kurzgeschlossen wird, dann ändert sich die Phasenlage der über das zweite induktive Koppelelement der Phasenvergleichsschaltung zugeführten Wechselspannung. Diese Phasenänderung gegenüber der Referenzspannung wird durch die Phasenvergleichsschaltung ausgewertet.

Ein Nachteil dieser bekannten Vorrichtung ist, daß die Leiterschleife mit der bewegbaren Einrichtung entlang des vorbestimmten Weges bewegt werden muß. Ferner hat diese bekannte Vorrichtung den Nachteil, daß das elektrische Netzwerk und die Phasenvergleichsschaltung sehr kompliziert aufgebaut sind. Solche kompliziert aufgebauten Schaltungen sind einerseits teuer und andererseits störanfällig, wodurch die Sicherheit der Signalübertragung beeinträchtigt wird.

Aus der CH-A-498 459 ist ferner bekannt, an die Einspeisestelle des Wechselspannungssignals eine Gleichrichterschaltung sowie einen dieser nachgeordneten spannungsdiskriminator anzuschließen. Die Anwendung dieses Merkmals auf die aus der NL-C-112 180 bekannte Vorrichtung wäre jedoch technisch unsinnig, da bei dieser Vorrichtung die Signalauswertung nicht mit Hilfe einer Gleichrichterschaltung und eines nachgeordneten Spannungsdiskriminators, sondern durch eine Phasenvergleichsschaltung erfolgt.

Es ist die Aufgabe der Erfindung, eine Möglichkeit zur Übertragung und Auswertung von Signalen für vorstehend beschriebene Anwendungen anzugeben, die sich durch erhöhte Sicherheit bei möglichst einfachem Aufbau auszeichnet.

Diese Aufgabe wird für eine Vorrichtung eingangs genannter Art erfindungsgemäß dadurch gelöst, daß die Leiterschleife eine ortsfeste und galvanisch geschlossene Leiterschleife ist, auf die das Wechselspannungssignal von der Auswertestelle her eingespeist wird, daß die Leiterschleife mit der bewegbaren Einrichtung elektromagnetisch gekoppelt ist und daß an die Einspeisestelle des Wechselspannungssignals eine Gleichrichterschaltung sowie ein dieser nachgeordneter Spannungsdiskriminator angeschlossen ist.

Eine Vorrichtung nach der Erfindung zeichnet sich durch besondere Einfachheit aus, weil die Leiterschleife aufgrund der elektromagnetischen Kopplung mit der bewegbaren Einrichtung ortsfest angeordnet ist. Ferner sind an der Auswertestelle Funktionseinheiten vorgesehen, deren Aufwand deutlich geringer ist, wie bei einer Signalauswertung durch eine Phasenvergleichsschaltung. Die Signalauswertung durch eine Gleichrichterschaltung sowie durch einen dieser nachgeordneten Spannungsdiskriminator ermöglicht es darüber hinaus, daß das Wechselspannungssignal von der Auswertestelle her auf die galvanisch geschlossene Leiterschleife eingespeist werden kann, wodurch der bauliche Aufwand weiter reduziert wird. Dabei wird aber ein Sicherheitsgrad bei der Übertragung eines Schaltbefehls von der bewegbaren Einrichtung zur Auswertestelle erreicht, der gegenüber den bisherigen Möglichkeiten weit höher liegt. Dies ist darauf zurückzuführen, daß die galvanisch geschlossene Leiterschleife zusammen mit der mit ihr elektromagnetisch gekoppelten Induktivität der bewegbaren Einrichtung ein induktives System bildet, welches im Normalzustand eine bestimmte Impedanz hat, die über die Einspeisestelle die Größe des Signals mitbestimmt, welches mit dem Spannungsdiskriminator ausgewertet wird. Wenn nun bei Betätigung des an der bewegbaren Einrichtung vorgesehenen Schalters die mit der Leiterschleife elektromagnetisch gekoppelte Induktivität der bewegbaren Einrichtung verändert wird, so verändert sich auch die Impedanz des induktiven Systems und damit die mit dem Spannungsdiskriminator auszuwertende Spannung. Gleiches gilt für einen Störungsfall im Bereich der Leiterschleife, wenn diese z. B. unterbrochen wird, der Schalter zur Erzeugung des Schaltbefehls fehlerhaft arbeitet oder die induktiven Koppelelemente defekt sind.

Wie noch gezeigt wird, ist es möglich, zur Ausbildung der Leiterschleife bereits vorhandene Konstruktionselemente auszunutzen. So kann beispielsweise bei einem Schiebetor die Leiterschleife durch eine fest installierte Führungsschiene und einen parallel zu dieser freitragend geführten ortsfesten Leiter gebildet sein, der an seinen Enden mit der Führungsschiene verbunden ist. Zur Einspeisung des Wechselspannungssignals und des Schaltbefehls können ein ortsfestes und ein mit der Einrichtung bewegbares Ringkern-Koppelelement vorgesehen sein, durch die der freitragende Leiter hindurchgeführt ist. Entsprechende Anordnungen sind auch für andere bewegbare Einrichtungen denkbar, die über einen vorbestimmten Weg bewegt werden, der nicht geradlinig sein muß. Dies wird aus der folgenden Beschreibung eines Ausführungsbeispieles an Hand der Figuren ersichtlich. Es zeigen :

Figur 1 eine schematische Darstellung der Erfindung gemäß einem Ausführungsbeispiel für eine geradlinig über einen vorbestimmten Weg bewegbare Einrichtung, und

Figur 2 schaltungstechnische Einzelheiten des in Fig. 1 gezeigten Prinzips.

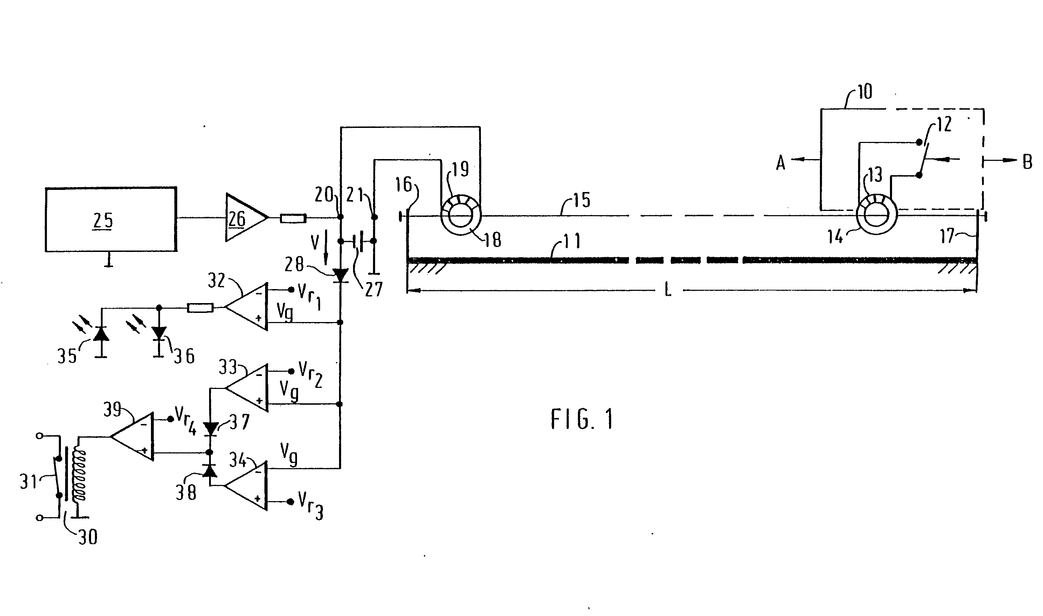

In Fig. 1 ist schematisch eine Einrichtung 10 dargestellt, die in den Pfeilrichtungen A und B bewegt werden kann. Dabei kann es sich beispielsweise um ein Schiebetor handeln, das längs eines vorbestimmten Weges zwischen einer Öffnungsstellung und einer Schließstellung zu transportieren ist. Die Länge dieses vorbestimmten Weges ist L, so daß sich die Einrichtung 10 bei der in Fig. 1 gezeigten Anordnung nahe ihrer rechten Grenzstellung befindet, in der sie mit ihrem rechten, gestrichelt dargestellten Teil eine über die Zeichenebene gemäß Fig. 1 nach rechts hinausgehende Öffnung verschließen kann. Hierzu erfolgt eine Bewegung der Einrichtung 10 in der Pfeilrichtung B. Die Rückbewegung erfolgt in der Pfeilrichtung A längs des Wegs mit der Länge L. Die Einrichtung 10 kann dabei auf einer schematisch dargestellten Führungsschiene 11 bewegt werden, bis sie am Linken Ende dieser Führungsschiene 11 in ihre andere Grenzstellung gelangt.

An der Einrichtung 10 ist ein Schalter 12 vorgesehen, der mit einer Induktionswicklung 13 verbunden ist, welche auf einem Ringkern 14 angeordnet ist. Dieser Ringkern 14 umgibt einen Leiter 15, der beim dargestellten Ausführungsbeispiel parallel zu der Führungsschiene 11 gespannt und bei 16 und 17 mit dieser verbunden ist. Der Leiter 15 kann beispielsweise ein Stahlseil sein. An dem in Fig. 1 linken Ende des Leiters 15 ist ein zweiter Ringkern 18 vorgesehen, der mit einer Induktionswicklung 19 versehen und stationär angeordnet ist.

Die beiden Ringkerne 14 und 18 bestehen aus einem hochpermeablen Material. Es ist zu erkennen, daß unabhängig von der Stellung des Ringkerns 14, die durch Bewegung der Einrichtung 10 relativ zum Leiter 15 veränderbar ist, an den Anschlüssen 20 und 21 der Wicklung 19 eine vorbestimmte Impedanz vorliegt, die von den Abmessungen der mit der Führungsschiene 11 und dem Leiter 15 gebildeten Leiterschleife sowie den Induktivitäten der Ringkerne 14 und 18 abhängt.

Ein Signalgenerator 25 erzeugt ein Wechselspannungssignal konstanter Frequenz und Amplitude von z. B. 1 kHz, das über ein aktives Filter 26 geleitet wird und dadurch Sinusform erhält. Das aktive Filter 26 sollte auch eine genaue Linstellung eines vorgegebenen Amplitudenwertes des Wechselspannungssignals ermöglichen. Dieses Wechselspannungssignal wird über die Anschlüsse 20 und 21 auf die Induktionswicklung 19 des Ringkerns 18 geleitet, so daß es über diesen auf die mit dem Leiter 15 und der Führungsschiene 11 gebildete Leiterschleife der Länge L eingespeist wird. Wenn die Impedanz, die das beschriebene induktive System an den Anschlußpunkten 20 und 21 erzeugt, gleich dem Innenwiderstand des Endverstärkers des aktiven Filters 26 ist, so herrscht zwischen dem Endverstärker und dem induktiven System Anpassung, so daß zwischen den Anschlüssen 20 und 21 eine vorbestimmte Signalspannung V liegt. Dieser Zustand kann durch die beschriebene Amplitudeneinstellung erreicht werden.

Ein Kondensator 27 zwischen den Anschlüssen 20 und 21 dient dazu, eventuell von außen eingekoppelte Störsignale zu beseitigen.

Im Zustand der Anpassung zwischen dem induktiven System und dem Endverstärker des aktiven Filters 26 wird ein optimaler Arbeitspunkt erreicht. Wenn nun der an der bewegbaren Einrichtung 10 vorgesehene Schalter 12 durch Anlaufen der Einrichtung 10 an einen Gegenstand oder eine Person geschlossen wird, so wird dadurch die Induktionswicklung 13 kurzgeschlossen, wodurch eine starke Rückwirkung auf die Impedanz des induktiven Systems entsteht. Der zwischen den Anschlüssen 20 und 21 erscheinende Impedanzwert wird dadurch geringer, so daß dann eine Fehlanpassung zwischen dem induktiven System und dem Endverstärker des aktiven Filters 26 herrscht, wodurch wiederum die Spannung zwischen den Anschlüssen 20 und 21 nicht mehr den Wert V hat, sondern einen geringeren Wert annimmt. Im Falle einer Unterbrechung des Leiters 15 bzw. der Leiterschleife ergibt sich eine Spannungserhöhung gegenüber dem Wert V.

Diese Spannungsveränderung wird über eine in Fig. 1 schematisch angedeutete Gleichrichterschaltung 28 in einer im unteren Teil der Fig. 1 gezeigten Diskriminatorschaltung ausgewertet und kann zur Betätigung eines Relais 30 dienen, welches seinen Kontakt 31 schließt oder öffnet, um dadurch einen elektrischen Antrieb der bewegbaren Einrichtung 10 abzuschalten oder umzusteuern. Die Art dieser Abschaltung oder Umsteuerung gehört nicht unmittelbar zum Erfindungsgedanken und ist deshalb in Fig. 1 nicht näher dargestellt.

Durch die Gleichrichterschaltung 28 wird das beschriebene Wechselspannungssignal gleichgerichtet und als Gleichspannung auf die Eingänge von drei Operationsverstärken 32, 33 und 34 geleitet. Der Operationsverstärker 32 erhält an seinem invertierenden Eingang eine Referenzspannung $Vr_1$, die mit der hinter der Gleichrichterschaltung 28 auftretenden gleichgerichteten Spannung Vg übereinstimmen möge, welche auf den nicht invertierenden Eingang des Operationsverstärkers 32 geführt ist. Der Ausgang des Operationsverstärkers 32 ist mit zwei entgegengesetzt gepolten Leuchtdioden 35 und 36 verbunden. Wenn die Spannung Vg mit der Referenzspannung $Vr_1$ übereinstimmt, so gibt der Operationsverstärker 32 an seinem Ausgang die Spannung Null ab, so daß die beiden Leuchtdioden 35 und 36 nicht aufleuchten. Weicht jedoch die Spannung Vg von der Referenzspannung $Vr_1$ infolge einer Betätigung des Schalters 12 beschriebener Art oder durch eine sonstige Veränderung des induktiven Systems ab, so leuchtet eine der Leuchtdioden 35 und 36 auf, abhängig davon, ob die Abweichung der Spannung Vg gegenüber der Referenzspannung $Vr_1$ in positiver oder negativer Richtung erfolgt.

Der Operationsverstärker 32 bildet also bereits für sich einen Spannungsdiskriminator, mit dem eine Betätigung des Schalters 12 oder Störungen im induktiven System angezeigt werden können.

Ein weiterer Spannungsdiskriminator ist durch die beiden Operationsverstärker 33 und 34 gebildet, die als Komparatorschaltung arbeiten. Der Operationsverstärker 33 erhält die Spannung Vg an seinem nicht invertierenden Eingang, während der Operationsverstärker 34 diese Spannung Vg an seinem invertierenden Eingang erhält. An dem invertierenden Eingang des Operationsverstärkers 33 liegt eine Referenzspannung $Vr_2$. An dem nicht invertierenden Eingang des Operationsverstärkers 34 liegt eine Referenzspannung $Vr_3$. Die Referenzspannung $Vr_2$ möge um einen geringen Betrag über der Spannung Vg, die Spannung $Vr_3$ um einen geringen Betrag unter der Spannung Vg liegen, wie sie im Normalfall, also bei geöffnetem Schalter 12, hinter der Gleichrichterschaltung 28 auftritt. Wenn nun durch Schließung des Schalters 12 eine Änderung der Spannung Vg verursacht wird, wobei diese Änderung die Differenz gegenüber der jeweiligen Referenzspannung $Vr_2$ bzw. $Vr_3$ erreichen muß, so entsteht am Ausgang des Operationsverstärkers 33 oder des Operationsverstärkers 34 abhängig von der Richtung der Spannungsänderung ein Signal, welches über eine Entkopplungsdiode 37 bzw. 38 auf eine Schwellenschaltung 39 geleitet wird, die durch einen Operationsverstärker gebildet ist, dessen zweitem Eingang eine Referenzspannung $Vr_4$ zugeführt wird. Bei Überschreiten der dadurch bestimmten Schaltschwelle gibt der Operationsverstärker 39 ein Signal auf das Relais 30, welches dann seinen Kontakt 31 betätigt.

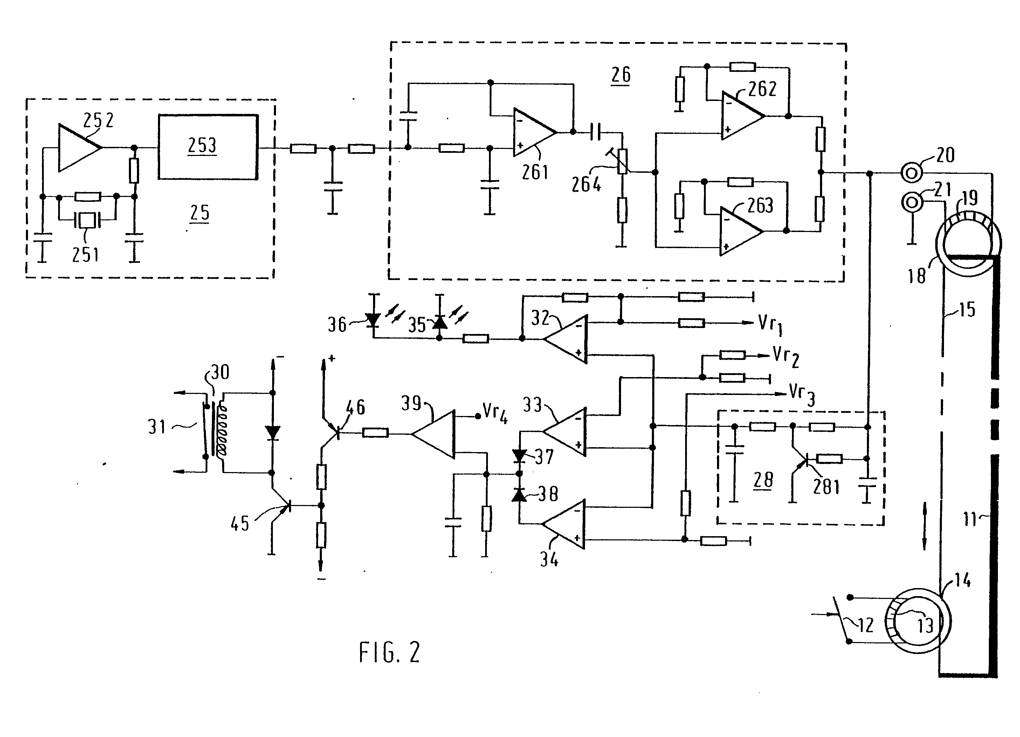

Fig. 2 zeigt nähere Schaltungseinzelheiten des in Fig. 1 dargestellten Schaltungsprinzips. Für gleichartige Funktionseinheiten sind in Fig. 2 dieselben Bezugszeichen wie in Fig. 1 verwendet. Es ist zu erkennen, daß der Signalgenerator 25 als frequenzbestimmendes Element einen Piezoschwinger 251 enthält, der in bekannter Weise im Gegenkopplungszweig eines Verstärkers 252 liegt, welcher mit weitgehend konstanter Versorgungsspannung betrieben wird und einen Frequenzteiler 253 speist. Dieser gibt ein Rechtecksignal an das aktive Filter 26 ab, welches drei Operationsverstärker 261, 262 und 263 enthält. Das Ausgangssignal des Operationsverstärkers 261 kann in gewissen Grenzen durch einen Spannungsteiler 264 verändert werden, um am Anschluß 20, d. h. am Ausgang des aktiven Filters 26, die dort erscheinende sinusförmige Wechselspannung auf einen vorbestimmten Wert einzustellen, der z. B. so gewählt ist, daß keine der beiden Leuchtdioden 35 und 36 im Normalzustand des induktiven Systems bei geöffnetem Schalter 12 aufleuchtet. Diese Einstellung hängt von der Länge L des Leiters 15 bzw. der Leiterschleife ab. Hier kann auch ein an sich bekanntes automatisches Abgleichsverfahren durchgeführt werden. Der Endverstärker des aktiven Filters 26 ist durch die beiden Operationsverstärker 262 und 263 gebildet.

Die Gleichrichterschaltung 28 enthält als gleichrichtendes Element einen Schalttransistor 281, der eine Einweggleichrichtung bewirkt. Die Verwendung eines solchen Schalttransistors 281 bietet gegenüber einer Dioden-Gleichrichterschaltung den Vorteil, daß die Gleichrichtung praktisch temperaturunabhängig erfolgt, was zur Schaltgenauigkeit der nachgeschalteten Operationsverstärker 33 und 34 beiträgt. Wie Fig. 2 zeigt, ist dem als Schwellenschaltung arbeitenden Operationsverstärker 39 ein Transistorverstärker mit Transistoren 45 und 46 nachgeschaltet, die die Schaltleistung für das Relais 30 zur Verfügung stellen, die erforderlich ist, um den Schaltkontakt 31 zu betätigen.

Die in Fig. 2 nicht näher bezeichneten Schaltelemente sind Widerstände und Kondensatoren, die in Schaltungen der hier beschriebenen Art als Kopplungs- bzw. Siebglieder dem Fachmann geläufig sind und deshalb in ihrer Funktion nicht näher erläutert werden müssen.

**Patentansprüche**

1. Vorrichtung zur induktiven Übertragung und Auswertung von Signalen, insbesondere von Schaltbefehlen, von einer über einen vorbestimmten Weg (L) bewegbaren, mit einem durch äußere Einwirkung betätigbaren Schalter (12) versehenen Einrichtung (10) zu einer Auswertestelle, wobei längs des vorbestimmten Weges (L) oder dazu parallel eine Leiterschleife (11, 15) vorgesehen ist, auf die ein Wechselspannungssignal (V) eingespeist wird, und wobei eine an der bewegbaren Einrichtung (10) angeordnete und mit der Leiterschleife (11, 15) gekoppelte Induktivität (13, 14) durch den Schalter (12) veränderbar ist, dadurch gekennzeichnet, daß die Leiterschleife (11, 15) eine ortsfeste und galvanisch geschlossene Leiterschleife ist, auf die das Wechselspannungssignal (V) von der Auswertestelle her eingespeist wird, daß die Leiterschleife (11, 15) mit der bewegbaren Einrichtung (10) elektromagnetisch gekoppelt ist und daß an die Einspeisestelle (20, 21) des Wechselspannungssignals (V) eine Gleichrichterschaltung (28) sowie ein dieser nachgeordneter Spannungsdiskriminator (32; 33, 34) angeschlossen ist.

2. Vorrichtung nach Anspruch 1, dadurch gekennzeichnet, daß die galvanisch geschlossene Leiterschleife (11, 15) längs des vorbestimmten Weges (L) oder dazu parallel einen freitragend angeordneten Leiter (15) aufweist, der durch ein mit der Einspeisestelle (20, 21) elektrisch verbundenes und ein an der bewegbaren Einrichtung (10) angeordnetes Ringkern-Koppelelement (14, 18) verläuft.

3. Vorrichtung nach Anspruch 2, dadurch gekennzeichnet, daß das aus der Leiterschleife (11, 15) und den Koppelelementen (14, 18) bestehende System eine an einen Generator (25, 26) zur Abgabe des Wechselspannungssignals angepaßte Impedanz aufweist.

4. Vorrichtung nach einem der vorhergehenden Ansprüche, dadurch gekennzeichnet, daß die Gleichrichterschaltung (28) als Gleichrichterelement einen Schalttransistor (281) enthält.

5. Vorrichtung nach einem der vorhergehenden Ansprüche, dadurch gekennzeichnet, daß der Spannungsdiskriminator zwei Operationsverstärker (33, 34) umfaßt, die jeweils mit einer um einen vorbestimmten Betrag über bzw. unter einer von der Gleichrichterschaltung (28) normalerweise abgegebenen auszuwertenden Spannung (Vg) liegenden Referenzspannung (Vr$_2$, Vr$_3$) beschaltet sind.

6. Vorrichtung nach einem der vorhergehenden Ansprüche, dadurch gekennzeichnet, daß der Spannungsdiskrimintor einen Operationsverstärker (32) aufweist, dem eine Referenzspannung (Vr$_1$) in Höhe der normalerweise von der Gleichrichterschaltung (28) abgegebenen Spannung (Vg) zugeführt ist und dessen Ausgang zwei gegensinnig geschaltete stromrichtungsabhängige Anzeigeelemente (35, 36) speist.

7. Vorrichtung nach Anspruch 5 oder 6, dadurch gekennzeicht, daß die beiden Operationsverstärker (33, 34) mit einer Schwellenschaltung (39) verbunden sind, die eine Schaltervorrichtung (30, 31) zur Durchführung eines Schaltbefehls steuert.

**Claims**

1. A device for the inductive transmission and evaluation of signals, in particular switching instructions, from a means (10) being movable along a predetermined path (L) and having a switch (12) which is externally actuable to an evaluation point, wherein a conductor loop (11, 15) fed with an alternating voltage signal (V) is provided along said predetermined path (L) or parallel thereto, and wherein an inductance (13, 14) provided on said movable means (10) and coupled with said conductor loop (11, 15) is changeable by said switch (12), characterized in that said conductor loop (11, 15) is a stationary and galvanically closed conductor loop to which said alternating voltage signal (V) is fed from the evaluation point ; that said conductor loop (11, 15) is electromagnetically coupled with said movable means (10), and that a rectifier circuit (28) and a sequential voltage discriminator (32; 33, 34) are connected to the feed-in point (20, 21) of said alternating voltage signal (V).

2. A device as set forth in claim 1, characterized in that said galvanically closed conductor loop (11, 15) includes along said predetermined path (L) or parallel thereto a self-supporting arranged conductor (15) which extends through a toroidal core coupling element (14, 18) being electrically connected to said feed-in point (20, 21) and said torodial core coupling element being provided on said movable means (10).

3. A device as set forth in claim 2, characterized in that the system consisting of said conductor loop (11, 15) and said coupling elements (14, 18) has an impedance which is matched to a generator (25, 26) for said alternating voltage signal.

4. A device as set forth in any of the foregoing claims, characterized in that said rectifier circuit (28) includes a switching transistor (218) as rectifier element.

5. A device as set forth in any of the foregoing claims, characterized in that said voltage discriminator comprises two operational amplifiers (33, 34) each of them being connected to a reference voltage ($Vr_2$, $Vr_3$) which is by a predetermined value higher or lower than a voltage (Vg) to be evaluated and being normally generated by said rectifier circuit (28).

6. A device as set forth in any of the foregoing claims, characterized in that said voltage discriminator comprises one operational amplifier (32) to which a reference voltage ($Vr_1$) is fed in the magnitude of the voltage (Vg) normally generated by said rectifier circuit (28), the output of said operational amplifier feeding two indicator elements (35, 36) which are dependent on the current direction and connected opposite to each other.

7. A device as set forth in claim 5 or 6, characterized in that the two operational amplifiers (33, 34) are connected to a threshold circuit (39) controlling a switching device (30, 31) for performing a switching instruction.

## Revendications

1. Dispositif pour la transmission inductive et l'exploitation de signaux, et en particulier d'instructions d'operation, d'un dispositif (10) pourvu d'un commutateur (12) pouvant être commandé par une action extérieure et mobile suivant un trajet prédéterminé (L), à un poste d'exploitation, une boucle conductrice (11, 15) étant prévue le long du trajet prédéterminé (L) ou parallèlement à celui-ci, en vue de recevoir un signal (V) à tension alternative, dans lequel une inductance (13, 14), couplée à la boucle conductrice (11, 15) et disposée dans le dispositif mobile (10), peut être modifiée par le commutateur (12), caractérisé en ce que la boucle conductrice (11, 15) est une boucle conductrice fixe et galvaniquement fermée, qui reçoit le signal (V) à tension alternative provenant du poste d'exploitation, en ce que la boucle conductrice (11, 15) est couplée électromagnétiquement au dispositif mobile (10) et en ce que le poste d'alimentation (20, 21) du signal (V) à tension alternative est raccordé à un circuit redresseur (28) ainsi qu'à un discriminateur de tension (32, 33, 34) disposé après celui-ci.

2. Dispositif selon la revendication 1, caractérisé en ce que la boucle conductrice (11, 15) galvaniquement fermée présente un conducteur non soutenu, disposé le long du trajet prédéterminé (L) ou parallèlement à celui-ci, qui passe à travers un élément de couplage à noyau annulaire (14, 18) disposé sur le dispositif mobile (10) et relié électriquement au poste d'alimentation (20, 21).

3. Dispositif selon la revendication 2, caractérisé en ce que le système constitué de la boucle conductrice (11, 15) et des éléments de couplage (14, 18) présente une impédance adaptée à un générateur (25, 26) fournissant le signal à tension alternative.

4. Dispositif selon l'une des revendications précédentes, caractérisé en ce que le circuit redresseur (28) contient comme élément redresseur un transistor de commutation (281).

5. Dispositif selon l'une des revendications précédentes, caractérisé en ce que le discriminateur de tension comporte deux amplificateurs opérationnels (33, 34), qui sont connectés chacun avec une tension de référence ($Vr_2$, $Vr_3$) supérieure, respectivement inférieure d'une quantité prédéterminée par rapport à la tension (Vg) à exploiter et fournie normalement par le circuit redresseur (28).

6. Dispositif selon l'une des revendications précédentes, caractérisé en ce que le discriminateur de tension présente un amplificateur opérationnel (32) auquel est appliquée une tension de référence ($Vr_1$) d'une hauteur égale à la tension (Vg) normalement fournie par le circuit redresseur (28) et dont la sortie alimente deux éléments d'affichage directionnelles (35, 36) par rapport à la direction du courant et connectés en sens opposé.

7. Dispositif selon la revendication 5 ou 6, caractérisé en ce que les deux amplificateurs opérationnels (33, 34) sont reliés par un circuit de seuil (39), qui commande un dispositif de commutation (30, 31) pour transmettre une instruction d'opération.

FIG. 1

0 092 773

FIG. 2